# EUROPÄISCHE PATENTSCHRIFT

(11) **EP 2 044 982 B1**
(45) Veröffentlichungstag und Bekanntmachung des Hinweises auf die Patenterteilung: **07.04.2010**
(21) Anmeldenummer: 08017252.1
(22) Anmeldetag: 01.10.2008
(51) Int. Cl.: A63B 59/04, A63B 49/10

(54) **Tischtennisschläger**
Table tennis bat
Raquette de ping-pong

(30) Priorität: 03.10.2007 DE 102007047453
(43) Veröffentlichungstag der Anmeldung: 08.04.2009
(73) Patentinhaber: Perseus Co. Ltd., Hongkong (HK)
(72) Erfinder: Nolte, Joachim, Josef, 41542 Dormagen (DE)
(74) Vertreter: Rau, Albrecht

(56) Entgegenhaltungen:
- EP-A- 0 701 844
- DE-A1- 3 417 728
- DE-A1- 4 415 509
- GB-A- 834 280
- US-A1- 2006 094 546

## Beschreibung

Die Erfindung betrifft einen Tischtennisschläger und ein Verfahren zur Herstellung eines Tischtennisschlägers.

Tischtennisschläger weisen üblicherweise ein Blatt aus Holz auf. Dieses hat fertigungsbedingt eine homogene Gewichts- und Steifigkeitsverteilung. Hierdurch ist die Anpassbarkeit und Formgestaltungsmöglichkeit sehr begrenzt.

Durch das GB 834 280 A ist es ferner bekannt, einen hohlen Tischtennisschläger aus Schaumpolystyrol herzustellen.

Gemäß DE 44 15 509 A1 ist ferner bekannt ein Hockeyschläger, wobei Kopf und Schaft beide aus zwei zueinander parallel verlaufenden Hohlprofilen bestehen, und diese aus faserverstärkten Kunstoff bestehen.

Der Erfindung liegt daher die Aufgabe zugrunde, einen verbesserten Tischtennisschläger zu schaffen sowie ein Verfahren zu dessen Herstellung bereitzustellen.

Diese Aufgabe wird durch die Merkmale der Ansprüche 1 und 9 gelöst. Der Kern der Erfindung besteht darin, einen Tischtennisschläger aus einem Kunststoff ummantelten Blasschlauch herzustellen. Somit weist das Blatt des Tischtennisschlägers einen überwiegend hohlen Querschnitt auf. Durch die Anordnung des Schlauches sowie insbesondere die Dicke der Ummantelung können die mechanischen Eigenschaften des Tischtennisschlägers, insbesondere die Gewichtsverteilung der Schlagfläche sehr flexibel an die jeweiligen Bedürfnisse angepasst werden.

Eine Verstärkung des Kunststoffes durch Fasern, insbesondere aus Glas und/oder Aramid und/oder Karbon führt zu einer Verbesserung des Festigkeits-Gewichts-Verhältnisses. Die derartig hergestellten Tischtennisschläger haben eine hervorragende Steifigkeit bei minimalem Gewicht. Dies ist insbesondere auf den Einsatz von duroplastischem, faserverstärktem Kunststoff in Kombination mit hohlen Blasschläuchen zurückzuführen.

Weitere Vorteile der Erfindung ergeben sich aus den Unteransprüchen. Merkmale und Einzelheiten der Erfindung ergeben sich aus der Beschreibung mehrerer Ausführungsbeispiele anhand der Zeichnungen. Es zeigen:
- Fig. 1: eine Ansicht eines Tischtennisschlägers gemäß einem ersten Ausführungsbeispiel,
- Fig. 2: einen Schnitt durch den Tischtennisschläger gemäß Fig. 1 entlang der Linie II-II,
- Fig. 3: einen Schnitt durch den Tischtennisschläger gemäß Fig. 1 entlang der Linie III-III,
- Fig. 4: eine schematische Darstellung der Anordnung des Blasschlauches im Tischtennisschläger gemäß Fig. 1,
- Fig. 5: eine schematische Darstellung einer Negativ-Form zur Durchfiihrung des erfindungsgemäßen Verfahrens, und
- Fig. 6: eine Darstellung gemäß Fig. 4 eines Tischtennisschlägers gemäß einem zweiten Ausführungsbeispiel.

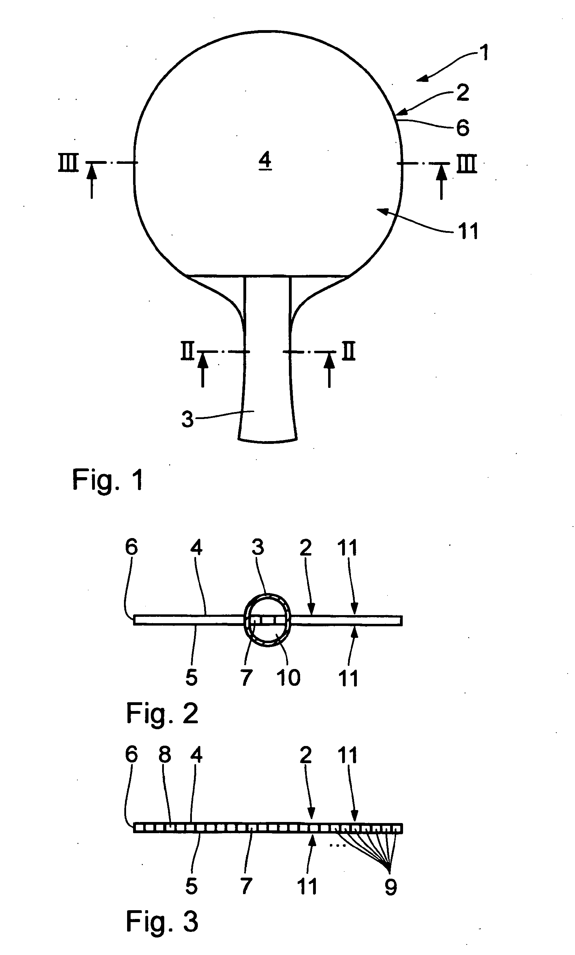

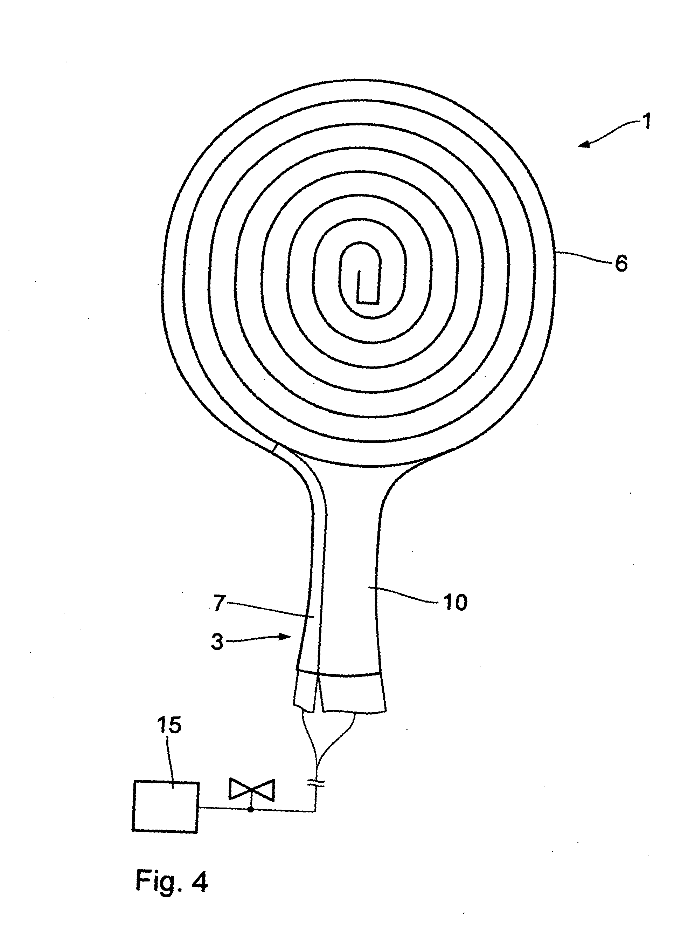

Im Folgenden wird unter Bezugnahme auf die Fig. 1 bis 4 ein erstes Ausfiihrungsbeispiel der Erfindung beschrieben. Ein Tischtennisschläger 1 weist ein Blatt 2 und einen Griff 3 auf. Hierbei bildet das Blatt 2 die Schlagfläche, mit welcher der Ball gespielt wird. Das Blatt 2 hat einen runden Umfang. Andere Formen sind jedoch denkbar. Das Blatt 2 weist eine erste Seite 4, eine dieser gegenüberliegende zweite Seite 5 und eine zwischen den Seiten 4, 5 angeordnete, diese verbindende Randfläche 6 auf.

Der Tischtennisschläger 1 ist aus einem Kunststoff ummantelten Blasschlauch 7 hergestellt. Der Tischtennisschläger 1, insbesondere dessen Blatt 2, weist somit einen überwiegend hohlen Innenraum auf. Hierbei ist der Innenraum des Blattes 2 durch die Seiten 4, 5 und die Randfläche 6 begrenzt. Der Innenraum des Blattes 2 ist insbesondere zumindest zu 50 %, insbesondere mindestens 70 %, insbesondere mindestens 85 % hohl.

Der Blasschlauch 7 ist luftdicht ausgebildet. Er ist aus einem elastischen Material. Er ist daher durch Beaufschlagung mit Druck aufblasbar, das heißt sein Durchmesser ist durch Beaufschlagung mit Druck regulierbar. Der Blasschlauch 7 ist vorteilhafterweise aus Polyamid. Er weist eine Wandstärke von weniger als 1 mm, insbesondere weniger als 0,5 mm, insbesondere weniger als 0,1 mm, vorzugsweise von höchstens 0,05 mm auf. Er hat daher einen vernachlässigbaren Anteil am Gesamtgewicht des Tischtennisschlägers 1. Der Gewichtsanteil des Blasschlauches 7 am Gesamtgewicht des Tischtennisschlägers 1 beträgt höchstens 10 %, insbesondere höchstens 1 %, insbesondere höchstens 0,1 %.

Der Blasschlauch 7 ist mit einem Kunststoff ummantelt. Die Ummantelung ist insbesondere als Gelege 8 ausgebildet. Beim Kunststoff handelt es sich vorzugsweise um einen duroplastischen Kunststoff. Der Kunststoff ist durch Fasern verstärkt, welche überwiegend parallel zueinander ausgelegt sind. Die Fasern haben jeweils eine Länge von mindestens 10 mm, insbesondere mindestens 50 mm, insbesondere mindestens 100 mm.

Bei dem Gelege 8 handelt es sich vorzugsweise um ein vorimprägniertes (Prepreg-)Gelege 8. Die Fasern des Geleges 8 sind mit Harz, insbesondere mit Epoxidharzbasis getränkt. Vinylesterharze sind ebenfalls möglich. Das Gelege 8 ist vorzugsweise mehrlagig ausgebildet.

Der Blasschlauch 7 ist spiralförmig angeordnet. Das Blatt 2 weist somit im Querschnitt ein Profil auf, welches aus einer Vielzahl aneinander gesetzter Kastenprofile 9 gebildet ist. Die Kastenprofile 9 haben vorzugsweise einen im Wesentlichen quadratischen Querschnitt, wobei die Ecken abgerundet sind. Alternative Querschnittsformen, insbesondere rechteckige, sind jedoch
ebenfalls möglich. Die Kastenprofile 9 haben jeweils zwei Seiten, welche zu den Seiten 4, 5 des Blattes 2 des Tischtennisschlägers 1 parallel ausgerichtet sind, und zwei Seiten, welche senkrecht hierzu angeordnet sind. Entsprechend sind die Fasern des Geleges 8 auf den den Seiten 4, 5 des Blattes 2 zugewandten Seiten des Blasschlauches 7 im Wesentlichen parallel zu den Seiten 4, 5 des Blattes 2 des Tischtennisschlägers 1 ausgerichtet.

Weiterhin kann vorgesehen sein, eine durchgehende Decklage im Bereich der Seiten 4, 5 des Blattes 2 auf dem Blasschlauch anzuordnen. Die Decklage ist vorteilhafterweise ebenfalls aus einem faserverstärkten, duroplastischen Kunststoff.

Der Blasschlauch 7 erstreckt sich aus dem Blatt 2 durch den Griff 3 des Tischtennisschlägers 1. Der Griff 3 ist somit einstückig mit dem Blatt 2 des Tischtennisschlägers 1 ausgebildet. Im Bereich des Griffes 3 ist außerdem ein weiterer Blasschlauch 10 vorgesehen. Der Blasschlauch 10 weist einen größeren Außendurchmesser auf als der Blasschlauch 7 aus dem Blatt 2 des Tischtennisschlägers 1.

Der Griff 3 hat eine Form, welche im Wesentlichen frei wählbar ist. In Betracht kommen insbesondere eine gerade, eine konkave, eine konische oder eine anatomische Form.

Außerdem ist das Blatt 2 des Tischtennisschlägers 1 auf jeder Seite 4, 5 mit einem Belag 11 versehen.

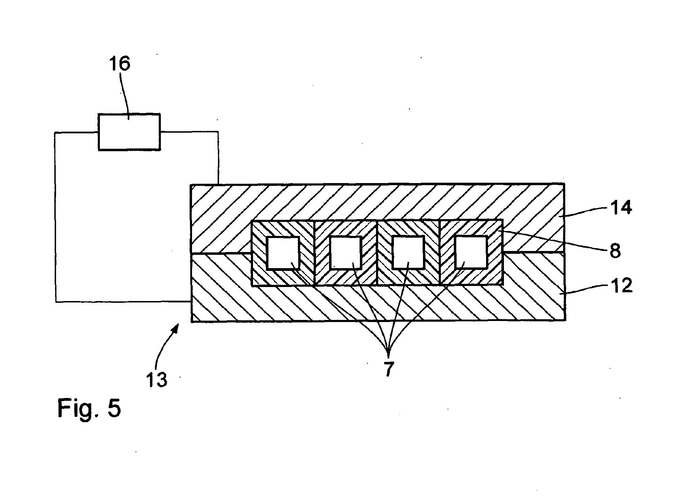

Im Folgenden wird unter Bezugnahme auf die Fig. 5 ein Verfahren zur Herstellung des Tischtennisschlägers 1 beschrieben. Zunächst wird der Blasschlauch 7 mit dem Gelege 8 aus faserverstärktem Kunststoff ummantelt. Hierzu wird ein harter, formbeständiger Kern in den Blasschlauch 7 eingeführt. Dieser Kern wird nach der Umwicklung des Blasschlauches 7 mit dem Gelege 8 wieder aus dem Blasschlauch 7 herausgezogen.

Der Blasschlauch 7 wird vorteilhafterweise mit mehreren Lagen des vorimprägnierten Geleges 8 umwickelt. Hierbei werden die Fasern des Geleges 8 gemäß einer vorgegebenen Anordnung ausgerichtet. Beim Umwickeln des Blasschlauches 7 ist das Gelege 8 flexibel. Der Harz, mit welchem die Fasern getränkt sind, ist nach verflüchtigtem Lösungsmittel pastös, ein ebenfalls vorhandener Härter noch nicht aktiviert. Der duroplastische Kunststoff ist in diesem Zustand noch unvernetzt.

Der mit dem Gelege 8 umwickelte Blasschlauch 7 wird sodann in der Unterschale 12 einer Negativ-Form 13 gemäß einer vorgegebenen Anordnung angeordnet. Gemäß dem ersten Ausführungsbeispiel der Erfindung ist vorzugsweise eine spiralförmige Anordnung des Blasschlauches 7 vorgesehen. Hierbei kommen mehrere Abschnitte desselben Blasschlauchs 7 direkt nebeneinander zu liegen. Das innerste Ende des Blasschlauchs 7 wird luftdicht verschlossen, während das entgegen gesetzte Ende aus der Negativ-Form 13 herausgefiihrt und an eine in den Figuren nur schematisch dargestellte Druckerzeugungs-Einrichtung 15 angeschlossen wird. Im Bereich des Griffs 3 wird der zusätzliche Blasschlauch 10 angeordnet. Hierbei werden die beiden Blasschläuche 7, 10 gemeinsam mit dem Gelege 8 ummantelt. Beim Blasschlauch 10 ist das innere Ende ebenfalls luftdicht verschlossen, während das andere Ende aus der Negativ-Form 13 herausgefiihrt und an die Druckerzeugungs-Einrichtung 15 angeschlossen ist.

Nach der vorgesehenen Anordnung der Blasschläuche 7, 10 in der Unterschale 12 der Negativ-Form 13 wird letztere durch eine zur Unterschale 12 passende Oberschale 14 verschlossen.

Sodann wird der Innenraum über die aus der Negativ-Form 13 herausgeführten Enden der Blasschläuche 7, 10 mit Druck von der Druckerzeugungs-Einrichtung 15 beaufschlagt.

Der Druck, mit welchem die Blasschläuche 7, 10 beaufschlagt werden, liegt im Bereich von 3 bar bis 10 bar, insbesondere im Bereich von 5 bar bis 7 bar.

Die Negativ-Form 13 wird mittels einer Heiz-Einrichtung 16 auf eine Aushärt-Temperatur T_{A} im Bereich von 50° C bis 250° C, insbesondere im Bereich von 100° C bis 200° C, insbesondere im Bereich von 140° C bis 160° C erhitzt. Durch die Hitzeeinwirkung wird das Harz des Geleges 8 zunächst verflüssigt. Das Gelege 8 wird von den sich aufgrund der Druckbeaufschlagung ausdehnender Blasschläuchen 7, 10 von innen gegen die Negativ-Form 13 gepresst. Hierbei wächst der Außendurchmesser des Blasschlauchs 7 mindestens bis auf seinen ursprünglichen Außendurchmesser, das heißt den Außendurchmesser des Blasschlauches 7, 10 im nicht mit dem Gelege 8 umwickelten Zustand. Die fortgesetzte Hitzeeinwirkung führt zu einer zunehmenden Polymerisation des Harzes des Geleges 8 ausgelöst durch die Aktivierung des Härters durch einen Katalysator bei Überschreiten einer bestimmten Aktivierungs-Temperatur. Die Polymerisation des Harzes des Geleges 8 ist nach einer Polymerisations-Dauer im Bereich von 5 min bis 60 min, insbesondere im Bereich von 7,5 min bis 15 min abgeschlossen. Der ausgehärtete Tischtennisschläger 1 aus duroplastischem Kunststoff ist nun hart und somit mechanisch weiter bearbeitbar. Nach Entnahme aus der Negativ-Form 13 wird er auf Länge abgesägt, geschliffen und lackiert. Er kann außerdem mit Belägen 11 versehen werden.

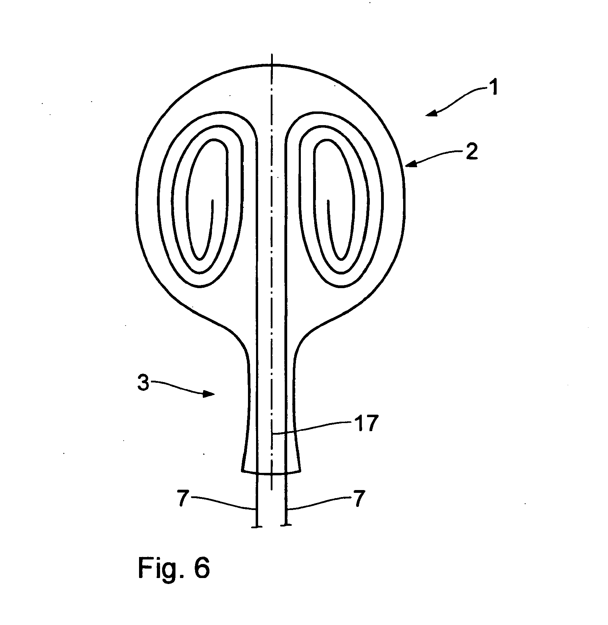

Im Folgenden wird unter Bezugnahme auf die Fig. 6 ein zweites Ausfiihrungsbeispiel der Erfindung beschrieben. Identische Teile erhalten dieselben Bezugszeichen wie bei dem ersten Ausfiihrungsbeispiel, auf dessen Beschreibung hiermit verwiesen wird. Der Unterschied zum ersten Ausfiihrungsbeispiel besteht darin, dass zwei Blasschläuche 7 zur Ausbildung des Blatts 2 vorgesehen sind. Die beiden Blasschläuche 7 sind spiegelsymmetrisch zu einer Mittelebene 17 angeordnet. Jeder der Blasschläuche 7 ist spiralförmig angeordnet.

Je nach Bedürfnissen sind auch andere Anordnungen eines oder mehrerer Blasschläuche 7 denkbar. Es ist insbesondere vorteilhafterweise möglich, die Gewichtsverteilung im Tischtennisschläger 1 durch bereichsweise Variation der Anzahl der Lagen des Geleges 8 zu regulieren. Außerdem sind die mechanischen Eigenschaften des Tischtennisschlägers 1 sehr flexibel durch eine gezielte Ausrichtung der Fasern des Geleges 8 beeinflussbar.

Im Folgenden wird der erfindungsgemäße Tischtennisschläger 1 sowie das erfindungsgemäße Verfahren zu dessen Herstellung noch einmal mit anderen Worten beschrieben.

Solange die Tischtennisschläger noch aus massivem Holz sind, sind die Schlagflächen fertigungsbedingt homogen. Diese Limitierung betrifft die Gewichts-, wie auch die Steifigkeitsverteilung. Die Erfindung betrifft die Spielbarkeit der Tischtennisschlagfläche und die Formgestaltungsmöglichkeit des Griffs 3. Durch den 100 %-igen Einsatz von faserverstärktem Kunststoff sind dem Konstrukteur alle Möglichkeiten gegeben, das Produkt den Spielerbedürfnissen anzupassen. Die formale Griffgestaltung unterliegt keinerlei Begrenzungen mehr, da nun der Griff 3 hohl ist und keine direkte Proportion mehr zwischen Form und Gewicht besteht. In der neuen Herstellungsweise lässt sich die Gewichts- und Festigkeitsverteilung konstruktiv in allen Bewegungsachsen gestalten. Die Erfindung erhöht außerdem die Lebensdauer des Schlägers 1, da er feuchtigkeitsunempfindlich ist.

Die Erfindung musste die Schwierigkeit überwinden, dass sich das Blasverfahren nicht ohne spezielle Modifikationen auf flache Bauteile anwenden ließ. Außerdem war für den Griff 3 ein anderer Blasschlauchdurchmesser notwendig als für das Blatt 2 des Tischtennisschlägers 1. Diese Probleme wurden erfindungsgemäß dadurch gelöst, dass die durch den Griff 3 gefiihrten Blasschläuche nur für das Blatt 2 des Tischtennisschlägers 1 einzeln mit Prepreg ummantelt wurden. In der Griffsektion wurden die Schläuche 7 gemeinsam ummantelt und bildeten so den größeren Griffdurchmesser.

Der Fertigungsprozess gestaltet sich in groben Zügen folgendermaßen: Man bringt mit Harz vorimprägnierte Fasern (so genanntes Prepreg) auf den Blasschlauch 7 auf und härtet das Ganze in einer Negativ-Form 13 (Abbildung des gesamten Tischtennisschlägers 1 ohne Gummibelag) unter Hitze aus. Dabei wird der Schlauch 7 aufgeblasen und drückt die Fasern mit dem Harz gegen die Negativ-Form 13. Das fertige Produkt ist nun hohl und aus einem Stück. Das Schlägerblatt 2 wird in der beispielhaften Ausfiihrung durch eine Reihung von vielen quadratischen Kastenprofilen 9 gebildet. Es kann aber auch aus einem einzigen hohlen Profil oder einigen größeren rechteckigen Profilen aufgebaut sein.

Bei der erfindungsgemäßen Ausführungsform ergibt sich bei gleichem Gewicht mehr als doppelte Steifigkeit. Umgekehrt lässt sich bei gleicher Festigkeit, wie der eines vergleichbaren Holzproduktes, durch Faserverbundmaterial erheblich Gewicht sparen. Wenn dies vom Spieler gewünscht wird, kann sogar in Kombination ein leichterer und trotzdem festerer Schläger 1 hergestellt werden.

## Patentansprüche

1. Tischtennisschläger (1) umfassend
a. ein Blatt (2) mit
i. einer ersten Seite (4),
ii. einer dieser gegenüberliegenden zweiten Seite (5) und
iii. einer zwischen den Seiten (4, 5) angeordneten, diese verbindenden Randfläche (6) und
b. einen Griff (3),
c. wobei das Blatt (2) einen durch die Seiten (4, 5) und die Randfläche (6) begrenzten Innenraum aufweist, welcher überwiegend hohl ist,
d. **dadurch gekennzeichnet, dass** das Blatt mindestens einen Blasschlauch (7) aus einem elastischen Material aufweist.

2. Tischtennisschläger (1) gemäß Anspruch 1, **dadurch gekennzeichnet, dass** der Blasschlauch (7) sich aus dem Blatt (2) durch den Griff (3) erstreckt.

3. Tischtennisschläger (1) gemäß Anspruch 1, **dadurch gekennzeichnet, dass** der Innenraum zu mindestens 50%, insbesondere mindestens 70%, insbesondere mindestens 85% hohl ist.

4. Tischtennisschläger (1) gemäß einem der Ansprüche 1 oder 3, **dadurch gekennzeichnet, dass** das Blatt (2) zumindest bereichsweise aus einem Kunststoff, insbesondere einem duroplastischen Kunststoff ist.

5. Tischtennisschläger (1) gemäß Anspruch 4, **dadurch gekennzeichnet, dass** der Kunststoff durch Fasern, insbesondere aus Glas und/oder Aramid und/oder Karbon, verstärkt ist.

6. Tischtennisschläger (1) gemäß Anspruch 1, **dadurch gekennzeichnet, dass** der mindestens eine Blasschlauch (7) spiralförmig angeordnet ist.

7. Tischtennisschläger (1) gemäß einem der Ansprüche 1 oder 6, **dadurch gekennzeichnet, dass** der Blasschlauch (7) von einem Fasergelege (8), insbesondere mit parallel zueinander angeordneten Fasern ummantelt ist.

8. Tischtennisschläger (1) gemäß einem der vorhergehenden Ansprüche, **dadurch gekennzeichnet, dass** das Blatt (2) zumindest auf einer der Seiten (4, 5) eine Decklage, insbesondere aus faserverstärktem, duroplastischem Kunststoff aufweist.

9. Verfahren zur Herstellung eines Tischtennisschlägers (1) umfassend die folgenden Schritte:
a. Bereitstellen mindestens eines aufblasbaren Schlauches (7),
b. Ummanteln des mindestens einen Blasschlauchs (7) mit einem Gelege (8) aus faserverstärktem Kunststoff,
c. Anordnen des mindestens einen ummantelten Blasschlauchs (7) in einer Negativ-Form (13) gemäß einer vorgegebenen Anordnung,
d. Beaufschlagen des mindestens einen Blasschlauchs (7) mit Druck zum Aufblasen des Schlauches (7) und
e. Aushärten des Kunststoffes.

10. Verfahren gemäß Anspruch 9, **dadurch gekennzeichnet, dass** der Blasschlauch (7) vor dem Beaufschlagen mit Druck einen Außendurchmesser aufweist, welcher beim Beaufschlagen des Blasschlauchs (7) mit Druck anwächst.

11. Verfahren gemäß einem der Ansprüche 9 bis 10, **dadurch gekennzeichnet, dass** die Negativ-Form zum Aushärten des Kunststoffes auf eine Aushärt-Temperatur (TA) im Bereich von 50 °C bis 250 °C, insbesondere im Bereich von 100 °C bis 200 °C, insbesondere im Bereich von 140 °C bis 160 °C erhitzt wird.

12. Verfahren gemäß einem der Ansprüche 9 bis 11, **dadurch gekennzeichnet, dass** das Gelege (8) von dem mit Kunststoff ummantelten Schlauch (7) durch die Beaufschlagung desselben mit Druck gegen die Negativ-Form (13) gepresst wird.

13. Verfahren gemäß einem der Ansprüche 9 bis 12, **dadurch gekennzeichnet, dass** es sich beim Kunststoff um einen duroplastischen Kunststoff handelt.

14. Verfahren gemäß einem der Ansprüche 9 bis 13, **dadurch gekennzeichnet, dass** es sich bei dem Gelege um ein vorimprägniertes Fasergelege handelt.

15. Verfahren gemäß Anspruch 14, **dadurch gekennzeichnet, dass** das Fasergelege (8) Fasern, insbesondere aus Glas und/oder Aramid und/oder Karbon, aufweist, welche vorzugsweise überwiegend parallel zueinander ausgelegt sind.

## Claims

1. Table tennis bat (1) comprising
a. a blade (2) with
i. a first side (4),
ii. a second side (5) opposite the latter and
iii. an edge face (6) that is arranged between the sides (4, 5) and connects the latter and
b. a handle (3),
c. wherein the blade (2) comprises an internal space defined by the sides (4, 5) and the edge face (6) which is largely hollow,
d. **characterised in that** the blade comprises at least one blow tube (7) made from an elastic material.

2. Table tennis bat (1) according to claim 1, **characterised in that** the blow tube (7) expends out of the blade (2) through the handle (3).

3. Table tennis bat (1) according to claim 1, **characterised in that** the internal space is hollow by up to at least 50 %, in particular at least 70 %, in particular at least 85 %.

4. Table tennis bat (1) according to one of claims 1 or 3, **characterised in that** the blade (2) is made at least in some areas of plastic, in particular a thermosetting plastic.

5. Table tennis bat (1) according to claim 4, **characterised in that** the plastic is reinforced by fibres, made in particular of glass and/or aramide and/or carbon.

6. Table tennis bat (1) according to claim 1, **characterised in that** the at least one blow tube (7) is arranged in a spiral formation.

7. Table tennis bat (1) according to one of claims 1 or 6, **characterised in that** the blow tube (7) is encased by a fibre fabric (8), in particular with fibres arranged in parallel.

8. Table tennis bat (1) according to one of the preceding claims, **characterised in that** the blade (2) at least on one side (4, 5) has a cover layer, made in particular of fibre-reinforced, thermosetting plastic.

9. Method for producing a table tennis bat (1) comprising the following steps:
a. preparing at least one inflatable tube (7),
b. encasing the at least one blow tube (7) with a fabric (8) made of fibre-reinforced plastic,
c. arranging the at least one encased blow tube (7) in a negative mould (13) according to predefined arrangement,
d. supplying the at least one blow tube (7) with pressure to inflate the tube (7) and
e. hardening the plastic.

10. Method according to claim 9, **characterised in that** the blow tube (7) before being supplied with pressure has an external diameter, which increases upon supplying the blow tube (7) with pressure.

11. Method according to one of claims 9 to 10, **characterised in that** the negative mould for hardening the plastic is heated to a hardening temperature (TA) of in the region of 50 °C to 250 °C, in particular in the region of 100 °C to 200 °C, in particular in the region of 140 °C to 160 °C.

12. Method according to one of claims 9 to 11, **characterised in that** the fabric (8) is pressed against the negative mould (13) by the tube (7) encased with plastic when the latter is charged with pressure.

13. Method according to one of claims 9 to 12, **characterised in that** the plastic is a thermosetting plastic.

14. Method according to one of claims 9 to 13, **characterised in that** the fabric is a preimpregnated fibre fabric.

15. Method according to claim 14, **characterised in that** the fibre fabric (8) comprises fibres, in particular made of glass and/or aramide and/or carbon, which are preferably arranged to be largely parallel to one another.

## Revendications

1. Raquette de ping-pong (1) comprenant :
a. une palette (2) présentant
i. une première face (4),
ii. une seconde face (5) opposée à celle-ci,
iii. une surface de bord (6) disposée entre les faces (4, 5) et reliant celles-ci, et
b. un manche (3),
c. la palette (2) présentant un espace intérieur délimité par les faces (4, 5) et la surface de bord (6), qui est principalement creux,
d. **caractérisée en ce que** la palette présente au moins un flexible gonflable (7) en matériau élastique.

2. Raquette de ping-pong (1) selon la revendication 1, **caractérisée en ce que** le flexible gonflable (7) s'étend depuis la palette (2) à travers le manche (3).

3. Raquette de ping-pong (1) selon la revendication 1, **caractérisée en ce que** l'espace intérieur est creux à au moins 50%, en particulier au moins 70%, en particulier au moins 85%.

4. Raquette de ping-pong (1) selon l'une des revendications 1 ou 3, **caractérisée en ce que** la palette (2) est, au moins par zones, en matière plastique, en particulier une matière duroplastique.

5. Raquette de ping-pong (1) selon la revendication 4, **caractérisée en ce que** la matière plastique est renforcée par des fibres, en particulier de verre et/ou d'aramide et/ou de carbone.

6. Raquette de ping-pong (1) selon la revendication 1, **caractérisée en ce que** le au moins un flexible gonflable (7) est disposé en spirale.

7. Raquette de ping-pong (1) selon l'une des revendications 1 ou 6, **caractérisée en ce que** le flexible gonflable (7) est gainé d'une structure fibreuse (8), en particulier constituée de fibres parallèles entre elles.

8. Raquette de ping-pong (1) selon l'une des revendications précédentes, **caractérisée en ce que** la palette (2) présente, au moins sur l'une des faces (4, 5), une couche de couverture, en particulier en matière duroplastique, renforcée de fibres.

9. Procédé de fabrication d'une raquette de ping-pong (1), comprenant les étapes suivantes :
a. Mise à disposition d'au moins un flexible gonflable (7),
b. Gainage du au moins un flexible gonflable (7) au moyen d'une structure (8) en matière plastique renforcée de fibres,
c. Mise en place du au moins un flexible gonflable gainé (7) dans une forme négative (13) selon un agencement prédéterminé,
d. Alimentation en pression du au moins un flexible gonflable (7) pour gonflage du flexible (7), et
e. Durcissement de la matière plastique.

10. Procédé selon la revendication 9, **caractérisé en ce que** le flexible gonflable (7) présente, avant d'être alimenté en pression, un diamètre extérieur qui augmente lors de l'alimentation en pression du flexible gonflable.

11. Procédé selon l'une des revendications 9 à 10, **caractérisé en ce que** la forme négative est chauffée, pour le durcissement de la matière plastique, à une température de durcissement (TA) dans la plage de 50°C à 250°C, en particulier dans la plage de 100°C à 200°C, en particulier dans la plage de 140°C à 160°C.

12. Procédé selon l'une des revendications 9 à 11, **caractérisé en ce que** la structure (8) est pressée par le flexible (7) gainé de matière plastique, du fait de l'alimentation de celui-ci en pression, contre la forme négative (13).

13. Procédé selon l'une des revendications 9 à 12, **caractérisé en ce que** la matière plastique est une matière duroplastique.

14. Procédé selon l'une des revendications 9 à 13, **caractérisé en ce que** la structure est une structure fibreuse pré-imprégnée.

15. Procédé selon la revendication 14, **caractérisé en ce que** la structure fibreuse (8) présente des fibres, en particulier de verre et/ou d'aramide et/ou de carbone qui, de préférence, sont conçues essentiellement parallèles entre elles.
